# EUROPÄISCHE PATENTSCHRIFT

(11) **EP 0 615 087 B1**
(45) Veröffentlichungstag und Bekanntmachung des Hinweises auf die Patenterteilung: **12.06.1996**
(21) Anmeldenummer: 93120532.2
(22) Anmeldetag: 20.12.1993
(51) Int. Cl.: F16K 31/06

(54) **Elektromagnetventil**
Solenoid valve
Vanne électromagnétique

(30) Priorität: 08.03.1993 DE 4307240
(43) Veröffentlichungstag der Anmeldung: 14.09.1994
(73) Patentinhaber: BERU Ruprecht GmbH & Co. KG, D-71636 Ludwigsburg (DE)
(72) Erfinder: Häusler, Günther, D-71254 Ditzingen (DE); Spannbauer, Thomas, D-71397 Leutenbach (DE)
(74) Vertreter: WILHELMS, KILIAN & PARTNER Patentanwälte

(56) Entgegenhaltungen:
- DE-A- 4 131 288
- DE-B- 1 204 485
- FR-A- 2 567 985
- GB-A- 2 186 349
- US-A- 3 523 676

## Beschreibung

Die Erfindung betrifft ein Elektromagnetventil nach dem Gattungsbegriff des Patentanspruchs 1 bzw. 2.

Ein derartiges Elektromagnetventil, das aus der FR-A-25 67 985 bekannt ist, wird insbesondere dazu verwandt, die Kraftstoffzufuhr zu einer Flammeinrichtung, beispielsweise einer Flammstarteinrichtung zum Vorwärmen der Ansaugluft einer Brennkraftmaschine zu steuern.

Bei dem aus der FR-A-25 67 985 bekannten Elektromagnetventil besteht die Einrichtung, die zwischen dem Ventilkörper und der Anordnung aus Spulenhülse und Spule eine axiale Vorspannung erzeugt, aus einer dazwischen angeordneten elastischen Scheibe oder einem Federring.

Aus der DE 41 31 288 A1 ist ein weiteres Elektromagnetventil bekannt, bei dem der Ventilkörper und die Anordnung aus Spulenhülse und Spule durch das Gehäuse in axialer Richtung zusammengehalten sind, das mit seinem ventilkörperseitigen Rand in eine im Ventilkörper ausgebildete Ausnehmung gebördelt ist. Beim Bördel- oder Einrollvorgang während der Montage werden das Gehäuse mit den darin angeordneten Bauteilen und der Ventilkörper axial zusammengespannt.

Die durch das Bördeln bei dem bekannten Elektromagnetventil erzeugte axiale Vorspannung reicht jedoch nicht aus, über eine lange Betriebsdauer die notwendige Schüttelfestigkeit und Dichtigkeit des Elektromagnetventils zu gewährleisten, was insbesondere dann von Bedeutung ist, wenn das Elektromagnetventil bei einer Flammstartanlage einer Brennkraftmaschine für ein Kraftfahrzeug verwandt wird.

Die der Erfindung zugrundeliegende Aufgabe besteht daher darin, ein Elektromagnetventil nach dem Gattungsbegriff des Patentanspruchs 1 bzw. 2 so auszugestalten, daß seine Schüttelfestigkeit und Dichtigkeit über eine lange Betriebsdauer gewährleistet ist.

Diese Aufgabe wird gemäß der Erfindung durch die Ausbildung gelöst, die im Kennzeichen des Patentanspruchs 1 bzw. 2 angegeben ist.

Durch die bei dem erfindungsgemäßen Elektromagnetventil vorgesehene tellerfederartige Ausbildung des Spulenhülsen- oder Spulenköperflansches, der eine axiale Vorspannung zwischen dem Ventilkörper und der Anordnung aus Spulenhülse und Spule erzeugt, kann die axiale Gesamtvorspannung erhöht werden, die eine Summe der axialen Vorspannung, mit der das Gehäuse die Spulenhülse und die Spule am Ventilkörper hält, und der axialen Vorspannung ist, die von dem Spulenhülsen- oder Spulenkörperflansch erzeugt wird. Das Elektromagnetventil ist dadurch gegenüber mechanischen Schüttel-, Schwenk- und Stoßbeanspruchungen stabiler.

Im folgenden werden anhand der zugehörigen Zeichnung besonders bevorzugte Ausführungsbeispiele der Erfindung näher beschrieben. Es zeigen
Fig. 1a eine Querschnittsansicht eines Ausführungsbeispiels des erfindungsgemäßen Elektromagnetventils,
Fig. 1b eine Querschnittsansicht eines weiteren Ausführungsbeispiels des erfindungsgemäßen Elektromagnetventils,
Fig. 2a und 2b die Ausbildung eines Ausführungsbeispiels des erfindungsgemäßen Elektromagnetventils im Spulenwicklungsbereich und
Fig. 3 eine Querschnittsansicht eines herkömmlichen Elektromagnetventils.

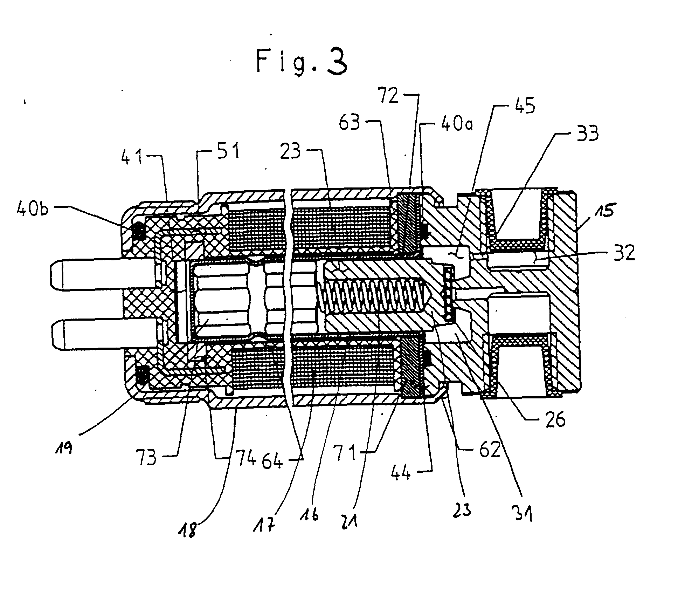

Wie es in Fig. 3 dargestellt ist, besteht ein herkömmliches Elektromagnetventil aus einem Ventilkörper 15, auf den eine Spulenhülse 16 aufgesetzt ist. Die Spulenhülse 16 ist von einer Spule 17 umgeben, die von einem Gehäuse 18 umschlossen wird, dessen Rand an der dem Ventilkörper 15 zugewandten Seite in eine Ausnehmung des Ventilkörpers gebördelt ist. In dem dem Ventilkörper 15 abgewandten Ende der Spulenhülse 16 befindet sich ein Magnetkörper 19, der sich über eine Schließfeder 21 in einem Anker 23 abstützt, der verschiebbar in die Spulenhülse 16 eingesetzt und in Schließrichtung durch die Feder 21 vorgespannt ist.

Beim Einschalten des Stromes wird der Anker 23 durch die elektromagnetische Kraftwirkung gegen die Kraft der Schließfeder 21 bis zum Anschlag an den Magnetkörper 19 zurückgezogen, wodurch der Durchgang zwischen einem Einströmraum 31 und einer Austrittsbohrung im Ventilkörper 15 freigegeben wird.

Bei dem in Fig. 3 dargestellten herkömmlichen Elektromagnetventil wird bei der Montage durch das Einbördeln des ventilkörperseitigen Randes des Gehäuses 18 in eine Ausnehmung im Ventilkörper 15 erreicht, daß die Anordnung unter einer gewissen axialen Vorspannung gehalten ist.

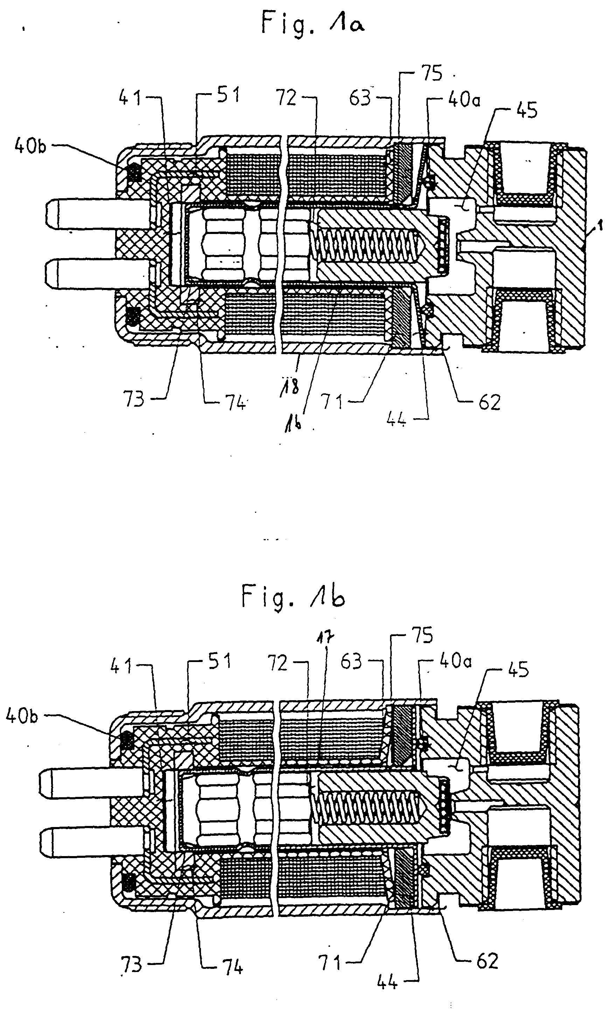

Fig. 1a zeigt ein erstes Ausführungsbeispiel des erfindungsgemäßen Elektromagnetventils vor der Endmontage des Gehäuses 18 am Ventilkörper 15, d.h. vor dem Einbördeln des ventilkörperseitigen Randes des Gehäuses 18 in eine Ausnehmung im Ventilkörper 15. Zur Verstärkung der axialen Vorspannung ist bei dem in Fig. la dargestellten Ausführungsbeispiel des erfindungsgemäßen Elektromagnetventils der radiale Flansch 44 der Spulenhülse 16 tellerfederartig gewölbt ausgebildet, so daß nach dem axialen Zusammenspannen während des Bördel- oder Einrollvorganges des Randes des Gehäuses 18 in der Ausnehmung im Ventilkörper 15 dieser Flansch 44 flachgedrückt wird und nach dem Umlegen des Bördelrandes 62 eine Vorspannung entsprechend der Federkennlinien erhalten wird, die sich zu der Vorspannung addiert, die durch den Einbördelvorgang selbst erzielt wird.

Fig. 1b zeigt ein zweites Ausführungsbeispiel des erfindungsgemäßen Elektromagnetventils, bei dem die zusätzliche axiale Vorspannung durch eine tellerfederartige Ausbildung des Spulenkörperflansches 63 erzielt wird. Diese Deformierung des Spulenkörperflansches 63 kann gezielt durch eine Wickelvorspannung erreicht werden.

Durch die tellerfederartige Ausbildung des Spulenhülsen- oder Spulenkörperflansches läßt sich die Stabilität des Elektromagnetventiles erheblich steigern. Bei einer Sinusschüttelmittelprüfung betrug diese Stabilität 50g statt bisher 22,5g.

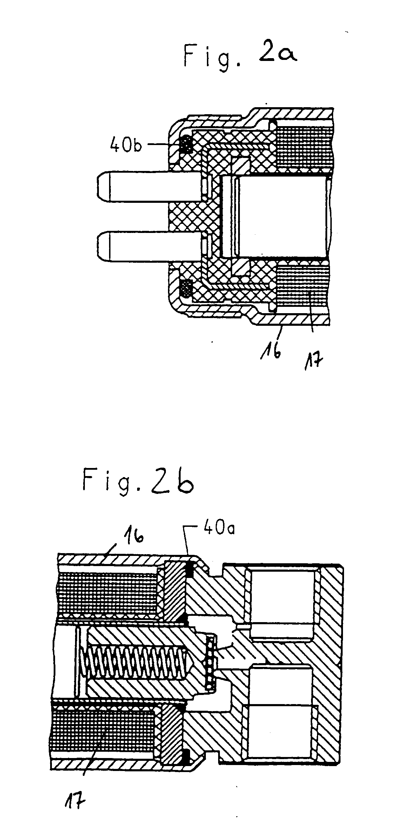

Um den hohen Anforderungen an die Schutzart nach DIN 40050 Blatt 9 zu genügen, können weiterhin 0-Ringe 40a und 40b am Gehäuse 18 so vorgesehen sein, wie es in den Fig. 2a und 2b dargestellt ist. Durch die in den Fig. 2a und 2b dargestellte Anordnung der 0-Ringe 40a, 40b wird gleichzeitig auch der Bereich zur Wicklung der Spule 17 abgedichtet. Mit der in den Fig. 2a und 2b dargestellten Ausbildung genügt das Elektromagnetventil allen Schutzartbeanspruchungen nach DIN 40 050 Blatt 9.

## Patentansprüche

1. Elektromagnetventil mit
- einem Ventilkörper (15),
- einer Spulenhülse (16), die auf dem Ventilkörper (15) angeordnet ist und auf der eine Spule (17) aus einem Spulenkörper und einer Spulenwicklung sitzt,
- einem Gehäuse (18), das die Spule (17) umschließt und mit einer axialen Vorspannung am Ventilkörper (15) hält,
- einem Anker (23), der axial verschieblich und federbeaufschlagt in der Spulenhülse und im Ventilkörper (15) angeordnet ist, und
- einer zwischen dem Ventilkörper (15) und der Anordnung aus Spulenhülse (16) und Spule (17) vorgesehenen Einrichtung, die dazwischen eine axiale Vorspannung erzeugt, dadurch gekennzeichnet, daß diese Einrichtung aus einem radialen tellerfederartig geformten Spulenhülsenflansch (44) besteht, der unter axialer Vorspannung flachgedrückt im Elektromagnetventil angeordnet ist.

2. Elektromagnetventil mit
- einem Ventilkörper (15),
- einer Spulenhülse (16), die auf dem Ventilkörper (15) angeordnet ist und auf der eine Spule (17) aus einem Spulenkörper und einer Spulenwicklung sitzt,
- einem Gehäuse (18), das die Spule (17) umschließt und mit einer axialen Vorspannung am Ventilkörper (15) hält,
- einem Anker (23), der axial verschieblich und federbeaufschlagt in der Spulenhülse und im Ventilkörper (15) angeordnet ist, und
- eine Einrichtung die zwischen dem Ventilkörper (15) und der Anordnung aus Spulenhülse (16) und Spule (17) eine axiale Vorspannung erzeugt, dadurch gekennzeichnet, daß diese Einrichtung aus einem tellerfederartig geformten Spulenkörperflansch (63) besteht, der unter axialer Vorspannung flachgedrückt im Elektromagnetventil angeordnet ist.

## Claims

1. Solenoid valve with
- a valve body (15)
- a coil sleeve (16), which is disposed on the valve body (15) and on which there bears a coil (17) consisting of a coil body and a coil winding;
- a casing (18), which surrounds the coil (17) and retains it on the valve body (15) by an axial bias;
- an anchor (23), which is disposed in the coil sleeve end in the valve body in an axially displaceable and spring-loaded manner; and
- a device provided between the valve body (15) and the arrangement consisting of the coil sleeve (16) and the coil (17) which generates an axial bias between them, characterised in that this device consists of a radial coil sleeve flange (44) which is formed in the manner of a radial disc spring which, under axial bias, is pressed flat in the solenoid valve.

2. Solenoid valve with
- a valve body (15);
- a coil sleeve (16), which is disposed on the valve body (15) and on which there bears a coil (17) consisting of a coil body and a coil winding;
- a casing (18), which surrounds the coil (17) and retains it on the valve body (15) with an axial bias;
- an anchor (23), which is disposed in the coil sleeve and in the valve body in an axially displaceable and spring-loaded manner; and
- a device which generates an axial bias between the valve body (15) and the arrangement of the coil sleeve (16) and the coil (17), characterised in that this device consists of a coil body flange (63) which is formed in the manner of a radial disc spring which, under axial bias, is pressed flat in the solenoid valve.

## Revendications

1. Electrovanne, comprenant
- un corps de vanne (15),
- un tube de bobine (16) qui est disposé sur le corps (15) de la vanne et sur lequel repose une bobine (17) se composant d'un corps de bobine et d'un enroulement de bobine,
- une enveloppe (18) qui entoure la bobine (17) et la tient sous une précontrainte axiale sur le corps de vanne (15),
- une armature (23) qui est disposée déplaçable axialement en étant soumise a la force d'un ressort dans le tube de bobine et dans le corps de vanne (15) et
- un dispositif qui est prévu entre le corps de vanne (15) et l'ensemble formé du tube de bobine (16) et de la bobine (17) et qui génère entre eux une précontrainte axiale, caractérisée en ce que ce dispositif se compose d'un collet radial (44) du tube de bobine qui est en forme de ressort Belleville et qui est disposé sous précontrainte axiale en étant comprimé à plat dans l'électrovanne.

2. Electrovanne, comprenant
- un corps de vanne (15),
- un tube de bobine (16) qui est disposé sur le corps de vanne (15) et sur lequel repose une bobine (17) formée d'un corps de bobine et d'un enroulement de bobine,
- une enveloppe (18) qui entoure la bobine (17) et la tient sous une précontrainte axiale dans le corps de vanne (15),
- une armature (23) qui est disposée mobile axialement en étant soumise à la force d'un ressort dans le tube de bobine et dans le corps de vanne (15) et
- un dispositif qui génère une précontrainte axiale, entre le corps de vanne (15) et l'ensemble formé du tube de bobine (16) et de la bobine (17), caractérisée en ce que ce dispositif se compose d'un collet (63) du corps de bobine qui est conformé en ressort Belleville et qui est disposé sous précontrainte axiale en étant comprimé à plat dans l'électrovanne.
